# EUROPEAN PATENT APPLICATION

(11) **EP 4 607 748 A1**
(43) Date of publication of application: **27.08.2025**
(21) Application number: 25154267.6
(22) Date of filing: 27.01.2025
(51) Int. Cl.: H02J 7/00, H01M 10/42

(54) **BATTERY CIRCUIT, CONTROL METHOD FOR BATTERY CIRCUIT, DEVICE, AND MEDIUM**

(30) Priority: 30.01.2024 CN 202410138040
(71) Applicant: BYD Company Limited, Shenzhen, Guangdong 518118 (CN)
(72) Inventor: LING, Heping, Shenzhen, 518118 (CN); LIU, Junhua, Shenzhen, 518118 (CN); XU, Yuan, Shenzhen, 518118 (CN); YUAN, Yijin, Shenzhen, 518118 (CN); WEN, Qi, Shenzhen, 518118 (CN)
(74) Representative: Taor, Simon Edward William

(57) **Abstract**

The present disclosure relates to the technical field of batteries, and discloses a battery circuit, a control method for a battery circuit, a device, and a medium. The battery circuit includes: an energy storage unit, at least one battery assembly, and a processing unit. For each battery assembly, the battery assembly is connected parallelly to two terminals of the energy storage unit, and the battery assembly includes a first bridge arm, where the first bridge arm includes at least two serially connected first cells. The processing unit is connected to a control terminal of the energy storage unit and a control terminal of each first bridge arm, and configured to control at least one first cell in at least one first bridge arm to connect to the energy storage unit, where different first cells have the same rated voltage. The battery circuit provides a hardware basis for the voltage balancing of cells.

## Description

### FIELD

The present disclosure relates to the technical field of batteries, and more specifically, to a battery circuit, a control method for a battery circuit, an electronic device, and a computer-readable storage medium.

### BACKGROUND

In practical use, due to the limited energy and capacity of a cell, the cell cannot meet the requirement of a load of high power class. Therefore, cells are often connected in series and parallel to form a battery assembly.

However, during the use of the battery assembly, due to the differences in initial capacity, equivalent series internal resistance, temperature, voltage, leakage current and other parameters of various cells in the manufacturing process, inconsistent charging and discharging of various cells in the battery assembly are caused. In particular, a certain cell or some cells is/are over-charged or over-discharged. For the battery assembly, the effective capacity is determined by the cells with the lowest capacity. If the battery assembly is in such an abnormal charging and discharging state for a long time, the inconsistency in parameters of the cells will be aggravated, causing the reduction of capacity and failure to work normally of the battery assembly. This will not only reduce the safety performance of the battery assembly, but also greatly reduce the service life of the battery assembly.

Therefore, to realize the wide use of a high-capacity battery assembly, there is a need for voltage balancing of various cells in the battery assembly.

### SUMMARY

An object of the present disclosure is to provide a new battery circuit, a control method for a battery circuit, a device, and a medium.

According to a first aspect of the present disclosure, a battery circuit is provided, which includes: an energy storage unit, at least one battery assembly, and a processing unit.

For each battery assembly, the battery assembly is connected parallelly to two terminals of the energy storage unit, and the battery assembly includes a first bridge arm, where the first bridge arm includes at least two serially connected first cells.

The processing unit is connected to a control terminal of the energy storage unit and a control terminal of each first bridge arm, and configured to control at least one first cell in at least one first bridge arm to connect to the energy storage unit, where different first cells have the same rated voltage.

Optionally, for each battery assembly, the battery assembly further includes:
a first switch and a second switch, where a first terminal of the energy storage unit, the first switch, the first bridge arm, the second switch, and a second terminal of the energy storage unit are connected in sequence; and
the processing unit is connected to a control terminal of the first switch and the second switch.

Optionally, the first bridge arm further includes a third switch and a fourth switch. Each first cell is connected serially to the third switch and then parallelly to the fourth switch; and
the processing unit is connected to a control terminal of the third switch and the fourth switch.

Optionally, for the at least one battery assembly, the battery assembly further includes a second bridge arm, where the second bridge arm includes a second cell. The processing unit is further configured to control the second cell in the second bridge arm to connect to the energy storage unit.

Optionally, the first bridge arm is connected parallelly to the two terminals of the energy storage unit, and the second bridge arm is connected parallelly to the two terminals of the energy storage unit.

Optionally, for the at least one battery assembly, the battery assembly further includes: a seventh switch and an eighth switch. The first terminal of the energy storage unit, the seventh switch, the second bridge arm, the eighth switch, and the second terminal of the energy storage unit are connected in sequence.

The second bridge arm includes at least two serially connected second cells.

The processing unit is connected to a control terminal of the seventh switch and the eighth switch, and further configured to control at least one second cell in at least one second bridge arm to connect to the energy storage unit.

Optionally, the battery circuit further includes a fifth switch and a sixth switch.

The first terminal of the energy storage unit, the fifth switch, the second bridge arm, and the second terminal of the energy storage unit are connected in sequence.

The first terminal of the energy storage unit, the first bridge arm, the sixth switch, and the second terminal of the energy storage unit are connected in sequence.

The processing unit is connected to a control terminal of the fifth switch and the sixth switch.

Optionally, the fifth switch and the sixth switch are connected serially;
the first bridge arm and the second bridge arm are connected serially; and
the point of connection of the fifth switch and the sixth switch is connected to the point of connection of the first bridge arm and the second bridge arm.

Optionally, the second bridge arm further includes:
a ninth switch and a tenth switch, where each second cell is connected serially to the ninth switch and then parallelly to the tenth switch; and
the processing unit is connected to a control terminal of the ninth switch and the tenth switch.

Optionally, the battery circuit further includes: a discharging unit, where
the discharging unit is connected parallelly to the energy storage unit.

Optionally, the battery circuit further includes: an eleventh switch and a twelfth switch.

The first terminal of the energy storage unit, the eleventh switch, the discharging unit, the twelfth switch, and the second terminal of the energy storage unit are connected in sequence.

The processing unit is connected to a control terminal of the eleventh switch and the twelfth switch, and configured to control whether to connect the discharging unit to the energy storage unit or not.

According to a second aspect of the present disclosure, a control method for a battery circuit is provided. The method includes the following steps:

Num1 first discharging cell(s) in a first target bridge arm is/are controlled to charge an energy storage unit, when conditions for voltage balancing in a bridge arm are satisfied.

The num1 first discharging cell(s) in the first target bridge arm are controlled to stop charging the energy storage unit, when the voltage of the energy storage unit is the same as the voltage across two terminals of the num1 first discharging cell(s).

The energy storage unit is controlled to charge num2 first charging cell(s) in the first target bridge arm.

The battery circuit includes: the energy storage unit, and a battery assembly. The battery assembly includes a bridge arm, and the bridge arm includes at least two serially connected cells.

Optionally, the method further includes the following steps.

The step of controlling the num1 first discharging cell(s) in the first target bridge arm to charge the energy storage unit is repeated, when the voltage of the energy storage unit is the same as the voltage across two terminals of the num2 first charging cell(s), until the difference between the voltage across the two terminals of the num1 first discharging cell(s) and the voltage across the two terminals of the num2 first charging cell(s) is less than or equal to a first preset threshold.

Optionally, there are n cells in the first target bridge arm, and num1 and num2 are the same. If n is an even number, num1≤n/2; and if n is an odd number, num1≤(n+1)/2.

Optionally, the method further includes the following steps.

A discharging unit is controlled to connect to the energy storage unit, when the difference between the voltage across the two terminals of the num1 first discharging cell(s) and the voltage across the two terminals of the num2 first charging cell(s) is less than or equal to the first preset threshold.

The discharging unit is controlled to disconnect from the energy storage unit, when the difference between the voltage across the two terminals of the num1 first discharging cell(s) and the voltage across the two terminals of the num2 first charging cell(s) is larger than the first preset threshold.

The battery circuit further includes the discharging unit.

Optionally, the method further includes the following steps.

Num4 second discharging cell(s) in num3 second target bridge arm(s) is/are controlled to charge the energy storage unit, when conditions for voltage balancing between bridge arms are satisfied.

The num4 second discharging cell(s) is/are controlled to stop charging the energy storage unit, when the voltage of the energy storage unit is the same as the voltage across two terminals of the num4 second discharging cell(s).

The energy storage unit is controlled to charge num6 second charging cell(s) in num5 third target bridge arm(s).

Optionally, the method further includes the following steps.

A voltage balancing type is acquired.

The conditions for voltage balancing in a bridge arm are determined to be satisfied if the voltage balancing type is voltage balancing in a bridge arm.

The conditions for voltage balancing between bridge arms are determined to be satisfied if the voltage balancing type is voltage balancing between bridge arms.

In a third aspect of the present disclosure, an electronic device is provided. The electronic device includes a battery circuit according to any embodiment in the first aspect.

Alternatively, the electronic device includes a memory and a processor, where the storage is configured to store a computer program, and the processor is configured to call the computer instruction in the memory, to implement the method according to any embodiment in the second aspect.

In a fourth aspect of the present disclosure, a computer-readable storage medium is provided, which stores a computer program, where the computer program, when executed by a processor, implements the method according to any embodiment in the second aspect.

An embodiment of the present disclosure provides a battery circuit, which includes: an energy storage unit, at least one battery assembly, and a processing unit, For each battery assembly, the battery assembly is connected parallelly to two terminals of the energy storage unit, and the battery assembly includes a first bridge arm, where the first bridge arm includes at least two serially connected first cells. The processing unit is connected to a control terminal of the energy storage unit and a control terminal of each first bridge arm, and configured to control at least one first cell in at least one first bridge arm to connect to the energy storage unit, where different first cells have the same rated voltage. The battery circuit provided in the embodiment of the present disclosure provides a hardware basis for the voltage balancing of cells.

Other features and advantages of the present disclosure will become apparent from the following detailed description of exemplary embodiments of the present disclosure with reference to the drawings.

### BRIEF DESCRIPTION OF THE DRAWINGS

Accompanying drawings that are incorporated into and constitute a part of this specification show embodiments of the present disclosure, and are used together with the specification to explain the principle of the present disclosure.
FIG. 1 is a first schematic structural view of a battery circuit provided in an embodiment of the present disclosure;
FIG. 2 is a second schematic structural view of a battery circuit provided in an embodiment of the present disclosure;
FIG. 3 is a third schematic structural view of a battery circuit provided in an embodiment of the present disclosure;
FIG. 4 is a fourth schematic structural view of a battery circuit provided in an embodiment of the present disclosure;
FIG. 5 is a fifth second schematic structural view of a battery circuit provided in an embodiment of the present disclosure;
FIG. 6 is a schematic flowchart of a control method for a battery circuit provided in an embodiment of the present disclosure; and
FIG. 7 is a schematic structural view of an electronic device provided in an embodiment of the present disclosure.

### DETAILED DESCRIPTION

Various exemplary embodiments of the present disclosure are now be described in detail with reference to the accompanying drawings. It is to be noted that unless otherwise specifically specified, the relative arrangement, numerical expressions, and numerical values of components and steps described in the embodiments do not limit the scope of the present disclosure.

The following descriptions of at least one exemplary embodiment are merely illustrative, and do not constitute any limitation on the present disclosure and application or use thereof in any way.

Technologies, methods, and devices known to those of ordinary skill in related art may not be discussed in detail, but where appropriate, the technologies, the methods, and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

### <Embodiments of battery circuit>

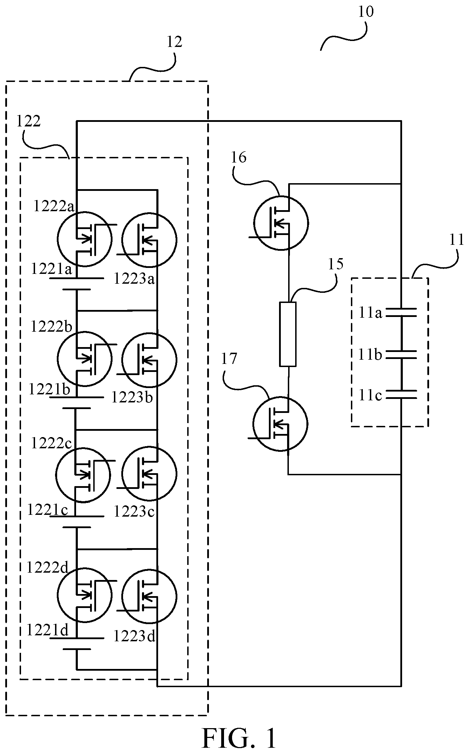

The present disclosure provides a battery circuit 10. As shown in FIG. 1, the battery circuit 10 includes an energy storage unit 11, at least one battery assembly 12 and a processing unit.

For each battery assembly 12, the battery assembly 12 is connected parallelly to two terminals of the energy storage unit 11, the battery assembly 12 includes a first bridge arm 122, where the first bridge arm 122 includes at least two serially connected first cells.

The processing unit is connected to a control terminal of the energy storage unit 11 and a control terminal of each first bridge arm, and configured to control at least one first cell in at least one first bridge arm 122 to connect to the energy storage unit 11,
where different first cells have the same rated voltage.

In this embodiment, FIG. 1 shows an example where the battery circuit 10 includes one battery assembly 12, and no processing unit is shown in FIG. 1.

The energy storage unit 11 is configured to store and release electric energy. In an example, the energy storage unit 11 may be specifically a capacitor or at least two serially connected capacitors. FIG. 1 exemplarily shows 3 serially connected capacitors. The 3 capacitors in FIG. 1 are respectively a capacitor 11a, a capacitor 11b and a capacitor 11c.

When the at least one battery assembly 12 is at least two battery assemblies 12, each battery assembly 12 is connected parallelly to the two terminals of the energy storage unit 11.

For each battery assembly 12, the first bridge arm 122 includes at least two serially connected first cells. FIG. 1 shows an example where the first bridge arm 122 includes 4 first cells, and the four first cells are specifically a first cell 1221a, a first cell 1221b, a first cell 1221c and a first cell 1221d.

The processing unit is connected to a control terminal of the energy storage unit and a control terminal of the battery assembly, and configured to control at least one first cell in at least one battery assembly to connect to the energy storage unit. In an example, the processing unit can be exemplified as MCU.

For example, the processing unit controls two first cells in one battery assembly to connect to the energy storage unit. Based on the above disclosure, the processing unit controls, by controlling the energy storage unit and each battery assembly, two first cells in one first bridge arm to connect to the energy storage unit. Therefore, the two first cells in the one first bridge arm charge the energy storage unit. As the charging proceeds, the voltage corresponding to the two first cells in the one first bridge arm decreases, and the voltage across the two terminals of the energy storage unit rises. When the voltage corresponding to the two first cells in the one first bridge arm is the same as the voltage across the two terminals of the energy storage unit, the two first cells in the one first bridge arm stops charging the energy storage unit. On this basis, the processing unit enables, by controlling the energy storage unit and the first bridge arm, the energy storage unit to release the stored energy to other two first cells in the first bridge arm, or to two first cells in another first bridge arm. Accordingly, the voltage of the other two first cells in the first bridge arm or the two first cells in the another first bridge arm rises. Based on this principle, voltage balancing of first cells in the battery circuit provided in the embodiment of the present disclosure can be implemented. In other words, the battery circuit provided in the embodiment of the present disclosure provides a hardware basis for the voltage balancing of cells.

It is to be understood that the first cells in the battery assembly in the battery circuit provided in the embodiment of the present disclosure have the same rated voltage, because the cells have the same specification during the production of the battery assembly in the battery circuit of the embodiment of the present disclosure. On this basis, voltage balancing of first cells can be implemented by the same energy storage unit.

In summary, the embodiment of the present disclosure provides a battery circuit, which includes: an energy storage unit, at least one battery assembly, and a processing unit. For each battery assembly, the battery assembly is connected parallelly to two terminals of the energy storage unit, and the battery assembly includes a first bridge arm, where the first bridge arm includes at least two serially connected first cells. The processing unit is connected to a control terminal of the energy storage unit and a control terminal of each first bridge arm, and configured to control at least one first cell in at least one first bridge arm to connect to the energy storage unit, where different first cells have the same rated voltage. The battery circuit provided in the embodiment of the present disclosure provides a hardware basis for the voltage balancing of cells.

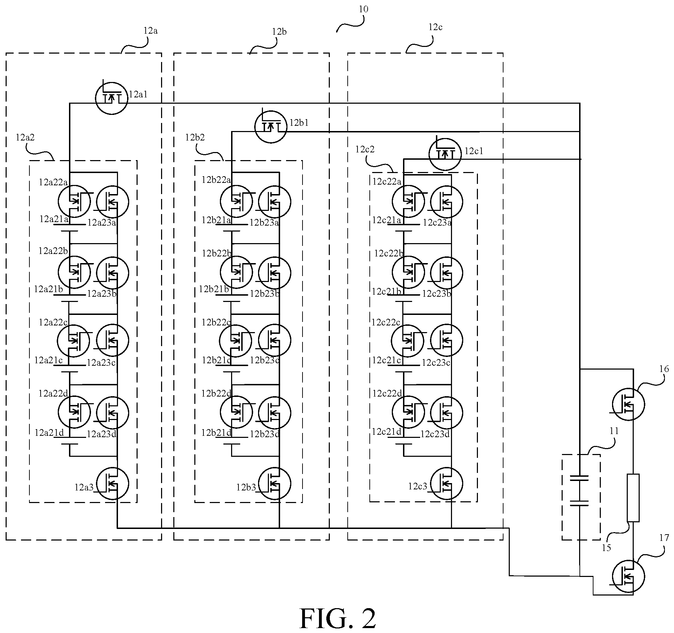

In an embodiment of the present disclosure, in order that the processing unit can control different battery assemblies to connect to the energy storage unit, as shown in FIG. 2, for each battery assembly, the battery assembly further includes:
a first switch and a second switch, where a first terminal of the energy storage unit, the first switch, the first bridge arm, the second switch and a second terminal of the energy storage unit are connected in sequence.

The processing unit is connected to a control terminal of the first switch and the second switch.

It is to be understood that the at least one battery assembly includes 3 battery assemblies in FIG. 2, and the three battery assemblies are respectively: a battery assembly 12a, a battery assembly 12b, and a battery assembly 12c.

The battery assembly 12a includes a first switch 12a1, a first bridge arm 12a2 and a second switch 12a3. The battery assembly 12b includes a first switch 12b1, a first bridge arm 12b2 and a second switch 12b3. The battery assembly 12c includes a first switch 12c1, a first bridge arm 12c2 and a second switch 12c3.

The first bridge arm 12a2 includes a first cell 12a21a, a first cell 12a21b, a first cell 12a21c, and a first cell 12a21d. The first bridge arm 12b2 includes a first cell 12b21a, a first cell 12b21b, a first cell 12b21c, and a first cell 12b21d. The first bridge arm 12c2 includes a first cell 12c21a, a first cell 12c21b, a first cell 12c21c and a first cell 12c21d.

In this embodiment, for each battery assembly, while the first switch and the second switch are controlled to be turned on by the processing unit, the processing unit can control the battery assembly to connect to the energy storage unit. Conversely, while the first switch and the second switch are controlled to be turned off by the processing unit, the processing unit can control the battery assembly not to connect to the energy storage unit.

In an example, as shown in FIG. 2, while the first switch 12a1 and the second switch 12a3 are controlled to be turned on by the processing unit, the processing unit can control the battery assembly 12a to connect to the energy storage unit. While the first switch 12c1 and the second switch 12c3 are controlled to be turned on by the processing unit, the processing unit can control the battery assembly 12c to connect to the energy storage unit.

In this embodiment, by setting a first switch and a second switch for each battery assembly, choice of the battery assembly connected to the energy storage unit can be made by the processing unit.

In an embodiment of the present disclosure, in order that the processing unit can control the connection of different first cells in the first bridge arm to the energy storage unit, as shown in FIG. 1, the first bridge arm 122 further includes a third switch and a fourth switch, and each first cell is connected serially to the third switch and then parallelly to the fourth switch; and
the processing unit is connected to a control terminal of the third switch and the fourth switch.

For example, in FIG. 1, the first cell 1221a is connected serially to the third switch 1222a, and the first cell 1221a is connected parallelly to the fourth switch 1223a; the first cell 1221b is connected serially to the third switch 1222b, and the first cell 1221b is connected parallelly to the fourth switch 1223b; the first cell 1221c is connected serially to the third switch 1222c, and the first cell 1221c is connected parallelly to the fourth switch 1223c; and the first cell 1221d is connected serially to the third switch 1222d, and the first cell 1221d is connected parallelly to the fourth switch 1223d.

Combining the above embodiments, the battery circuit provided in the embodiment of the present disclosure can also be as shown in FIG. 2. For example, in FIG. 2, in the first bridge arm 12a2, the first cell 12a21a is connected serially to the third switch 12a22a, and the first cell 12a21a is connected parallelly to the fourth switch 12a23a. The first cell 12a21b is connected serially to the third switch 12a22b, and the first cell 12a21b is connected parallelly to the fourth switch 12a23b. The first cell 12a21c is connected serially to the third switch 12a22c, and the first cell 12a21c is connected parallelly to the fourth switch 12a23c. The first cell 12a21d is connected serially to the third switch 12a22d, and the first cell 12a21d is connected parallelly to the fourth switch 12a23d.

In the first bridge arm 12b2, the first cell 12b21a is connected serially to the third switch 12b22a, and the first cell 12b21a is connected parallelly to the fourth switch 12b23a. The first cell 12b21b is connected serially to the third switch 12b22b, and the first cell 12b21b is connected parallelly to the fourth switch 12b23b. The first cell 12b21c is connected serially to the third switch 12b22c, and the first cell 12b21c is connected parallelly to the fourth switch 12b23c. The first cell 12b21d is connected serially to the third switch 12b22d, and the first cell 12b21d is connected parallelly to the fourth switch 12b23d.

In the first bridge arm 12c2, the first cell 12c21a is connected serially to the third switch 12c22a, and the first cell 12c21a is connected parallelly to the fourth switch 12c23a. The first cell 12c21b is connected serially to the third switch 12c22b, and the first cell 12c21b is connected parallelly to the fourth switch 12c23b. The first cell 12c21c is connected serially to the third switch 12c22c, and the first cell 12c21c is connected parallelly to the fourth switch 12c23c. The first cell 12c21d is connected serially to the third switch 12c22d, and the first cell 12c21d is connected parallelly to the fourth switch 12c23d.

In this embodiment, for each first bridge arm, while the first switch and the second switch corresponding to the first bridge arm are turned on, that is, when the first bridge arm is connected to the energy storage unit, if the processing unit controls the third switch serially connected to one first cell to be turned on and the fourth switch parallelly connected thereto to be turned off, the processing unit can control the first cell to connect to the energy storage unit. Conversely, if the third switch serially connected to the first cell is controlled to be turned off, and the fourth switch parallelly connected thereto is controlled to be turned on, the processing unit can control the first cell not to connect to the energy storage unit.

In an example, as shown in FIG. 2, in the first bridge arm 12a2, while the first switch 12a1 and the second switch 12a3 are controlled to be turned on by the processing unit, if the processing unit controls the third switch 12a22a to be turned off, the fourth switch 12a23a to be turned on, the third switch 12a22b to be turned off, the fourth switch 12a23b to be turned on, the third switch 12a22c to be turned on, the fourth switch 12a23c to be turned off, the third switch 12a22d to be turned on, and the fourth switch 12a23d to be turned off, the first cell 12a21c and the first cell 12a21d in the first bridge arm 12a2 can be connected to the energy storage unit.

In this embodiment, by setting a third switch and a fourth switch for each first cell, choice of the first cell connected to the energy storage unit can be made by the processing unit.

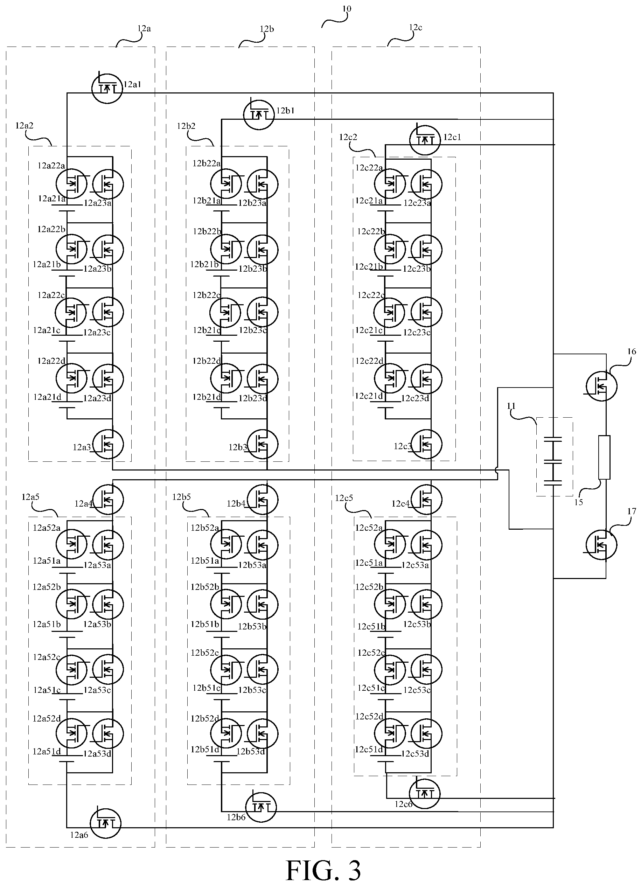

In an embodiment of the present disclosure, as shown in FIG. 3, for at least one battery assembly, the battery assembly further includes a second bridge arm, where the second bridge arm includes a second cell. The processing unit is further configured to control the second cell in the second bridge arm to connect to the energy storage unit.

It is to be understood that on the basis of the structure in FIG. 2, the battery assembly in FIG. 3 further includes: a second bridge arm 12a5, a second bridge arm 12b5 and a third bridge arm 12c5. Further, the second bridge arm 12a5 includes a second cell 12a51a, a second cell 12a51b, a second cell 12a51c, and a second cell 12a51d. The second bridge arm 12b5 includes a second cell 12b51a, a second cell 12b51b, a second cell 12b51c and a second cell 12b51d. The second bridge arm 12c5 includes a second cell 12c51a, a second cell 12c51b, a second cell 12c51c and a second cell 12c51d.

In this embodiment, by the arrangement of the second bridge arm, more bridge arms can be provided for the battery circuit.

In an embodiment of the present disclosure, as shown in FIGs. 2 to 5, the first bridge arm is connected parallelly to the two terminals of the energy storage unit 11, and the second bridge arm is connected parallelly to the two terminals of the energy storage unit 11.

In an embodiment of the present disclosure, as shown in FIG. 3, for at least one battery assembly, the battery assembly further includes: a seventh switch and an eighth switch. The first terminal of the energy storage unit, the seventh switch, the second bridge arm, the eighth switch, and the second terminal of the energy storage unit are connected in sequence.

The second bridge arm includes at least two serially connected second cells.

The processing unit is connected to a control terminal of the seventh switch and the eighth switch, and further configured to control at least one second cell in at least one second bridge arm to connect to the energy storage unit.

It is to be understood that on the basis of the structure in FIG. 2, the battery assembly 12a in FIG. 3 further includes: a seventh switch 12a4 and an eighth switch 12a6. The battery assembly 12b further includes: a seventh switch 12b4 and an eighth switch 12b6. The battery assembly 12c further includes: a seventh switch 12c4 and an eighth switch 12c6.

In this embodiment, by setting the seventh switch and the eighth switch, the corresponding second bridge arm can be arranged, on the basis of the battery assembly including the first bridge arm. For example, for the battery assembly 12a, by setting the seventh switch 12a4 and the eighth switch 12a6, the corresponding second bridge arm 12a5 is arranged for the first bridge arm 12a2, and the second bridge arm 12a5 is connected parallelly to the two terminals of the energy storage unit.

Further, based on the principle by which the processing unit controls at least one first cell in the first bridge arm to connect to the energy storage unit to implement the function of voltage balancing, the processing unit is configured to, by connecting to the control terminal of the seventh switch and the eighth switch, control at least one second cell in at least one second bridge arm to connect to the energy storage unit, to implement voltage balancing between the first cell and the second cell or between second cells in the battery circuit.

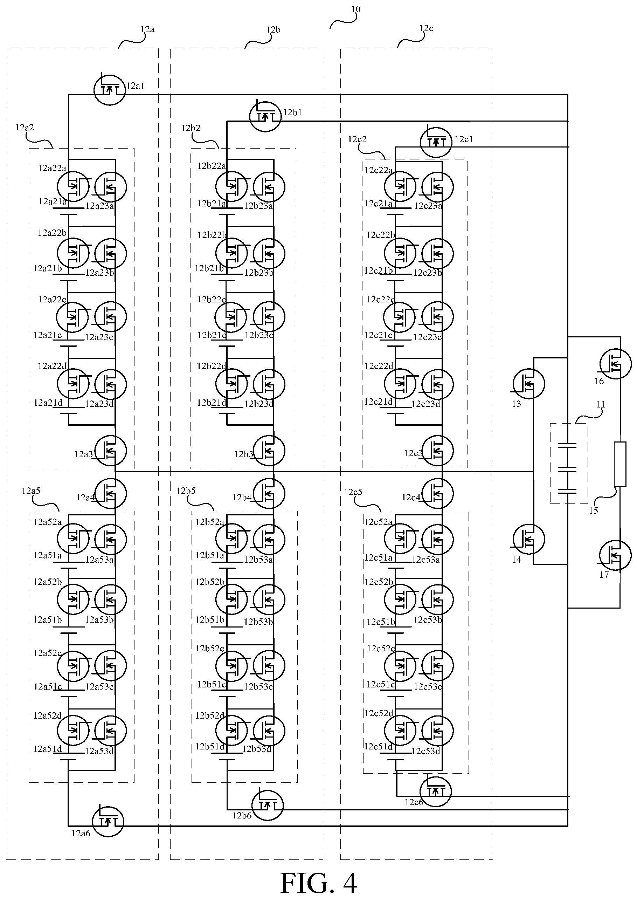

In an embodiment of the present disclosure, as shown in FIG. 4, the battery circuit 10 further includes a fifth switch 13 and a sixth switch 14.

The first terminal of the energy storage unit 11, the fifth switch 13, the second bridge arm, and the second terminal of the energy storage unit 11 are connected in sequence.

The first terminal of the energy storage unit 11, the first bridge arm, the sixth switch 14, and the second terminal of the energy storage unit 11 are connected in sequence.

The processing unit is connected to a control terminal of the fifth switch 13 and the sixth switch 14.

In the embodiment of the present disclosure, the processing unit specifically determines, by controlling the fifth switch 13 and the sixth switch 14, which one of the first bridge arms and/or the second bridge arms is to connect to the energy storage unit.

In an example, if the processing unit controls the first switch 12a1, the second switch 12a3 and the sixth switch 14 to be turned on and other switches in the battery circuit to be turned off, the processing unit controls the first bridge arm 12a2 to connect to the energy storage unit.

If the processing unit controls the seventh switch 12a4, the eighth switch 12a6 and the fifth switch 13 to be turned on and other switches in the battery circuit to be turned off, the processing unit controls the second bridge arm 12a5 to connect to the energy storage unit.

In an embodiment of the present disclosure, as shown in FIG. 4, the fifth switch 13 and the sixth switch 14 are connected serially;
the first bridge arm and the second bridge arm are connected serially; and
the point of connection of the fifth switch 13 and the sixth switch 14 is connected to the point of connection of the first bridge arm 12a2 and the second bridge arm 12a5.

In this embodiment, while the fifth switch 13 and the sixth switch 14 are controlled to determine which one of the first bridge arms and/or the second bridge arms is to connect to the energy storage unit, the complexity in structure of the battery circuit provided in the present disclosure can be reduced. Moreover, the first bridge arm and the second bridge arm are connected serially, and thus more cells are added for the battery assembly.

In an embodiment of the present disclosure, in order that the processing unit can control the connection of different second cells in the second bridge arm to the energy storage unit, as shown in FIGs. 3 or 4, the second bridge arm further includes:
a ninth switch and a tenth switch, and each second cell is connected serially to the ninth switch and then parallelly to the tenth switch.

The processing unit is connected to a control terminal of the ninth switch and the tenth switch.

It is to be understood that on the basis of the structure in FIG. 3 or FIG. 4, the second cell 12a51a is connected serially to a ninth switch 12a52a, and the second cell 12a51a is connected parallelly to a tenth switch 12a53a. The second cell 12a51b is connected serially to a ninth switch 12a52b, and the second cell 12a51b is connected parallelly to a tenth switch 12a53b. The second cell 12a51c is connected serially to a ninth switch 12a52c, and the second cell 12a51c is connected parallelly to a tenth switch 12a53c. The second cell 12a51d is connected serially to a ninth switch 12a52d, and the second cell 12a51d is connected parallelly to a tenth switch 12a53d.

The second cell 12b51a is connected serially to a ninth switch 12b52a, and the second cell 12b51a is connected parallelly to a tenth switch 12b53a. The second cell 12b51b is connected serially to a ninth switch 12b52b, and the second cell 12b51b is connected parallelly to a tenth switch 12b53b. The second cell 12b51c is connected serially to a ninth switch 12b52c, and the second cell 12b51c is connected parallelly to a tenth switch 12b53c. The second cell 12b51d is connected serially to a ninth switch 12b52d, and the second cell 12b51d is connected parallelly to a tenth switch 12b53d.

The second cell 12c51a is connected serially to a ninth switch 12c52a, and the second cell 12c51a is connected parallelly to a tenth switch 12c53a. The second cell 12c51b is connected serially to a ninth switch 12c52b, and the second cell 12c51b is connected parallelly to a tenth switch 12c53b.The second cell 12c51c is connected serially to a ninth switch 12c52c, and the second cell 12c51c is connected parallelly to a tenth switch 12c53c. The second cell 12c51d is connected serially to a ninth switch 12c52d, and the second cell 12c51c is connected parallelly to a tenth switch 12c53d.

In the embodiment of the present disclosure, for each second bridge arm, while the seventh switch and the eighth switch corresponding to the second bridge arm are turned on, that is, the second bridge arm is connected to the energy storage unit, if the processing unit controls the ninth switch serially connected to one second cell to be turned on and the tenth switch parallelly connected thereto to be turned off, the processing unit can control the second cell to connect to the energy storage unit. Conversely, if the ninth switch serially connected to the second cell is controlled to be turned off, and the tenth switch parallelly connected thereto is controlled to be turned on, the processing unit can control the second cell not to connect to the energy storage unit.

On the basis of any embodiment described above, the battery circuit 10 provided in an embodiment of the present disclosure further includes a discharging unit 15 as shown in FIGs. 1 to 4.

The discharging unit 15 is connected parallelly to the energy storage unit 11.

In an embodiment, the discharging unit 15 may be specifically a resistor, or other energy consuming devices.

In this embodiment, after voltage balancing in the battery circuit, the energy storage unit 11 is still energized. To avoid the energization of the energy storage unit 11, the processing unit enables the discharging unit 15 to consume the electric energy on the energy storage unit after voltage balancing, to avoid the energization of the energy storage unit.

In an embodiment of the present disclosure, the battery circuit provided in the embodiment of the present disclosure further includes: an eleventh switch 16 and a twelfth switch 17.

The first terminal of the energy storage unit 11, the eleventh switch 16, the discharging unit 15, the twelfth switch 17 and the second terminal of the energy storage unit 11 are connected in sequence.

The processing unit is connected to a control terminal of the eleventh switch 16 and the twelfth switch 17, and configured to control whether to connect the discharging unit 15 to the energy storage unit 11 or not.

In this embodiment, after voltage balancing in the battery circuit, the processing unit controls the eleventh switch 16 and the twelfth switch 17 to be turned on, such that the energy storage unit 11 and the discharging unit 15 are connected in parallel, and the electric energy on the energy storage unit 11 are consumed by the discharging unit 15.

Correspondingly, during the voltage balancing in the battery circuit, the processing unit controls the eleventh switch 16 and the twelfth switch 17 to be turned off, such that the energy storage unit 11 is disconnected from the discharging unit 15, and the discharging unit 15 dose not consume the electric energy on the energy storage unit 11.

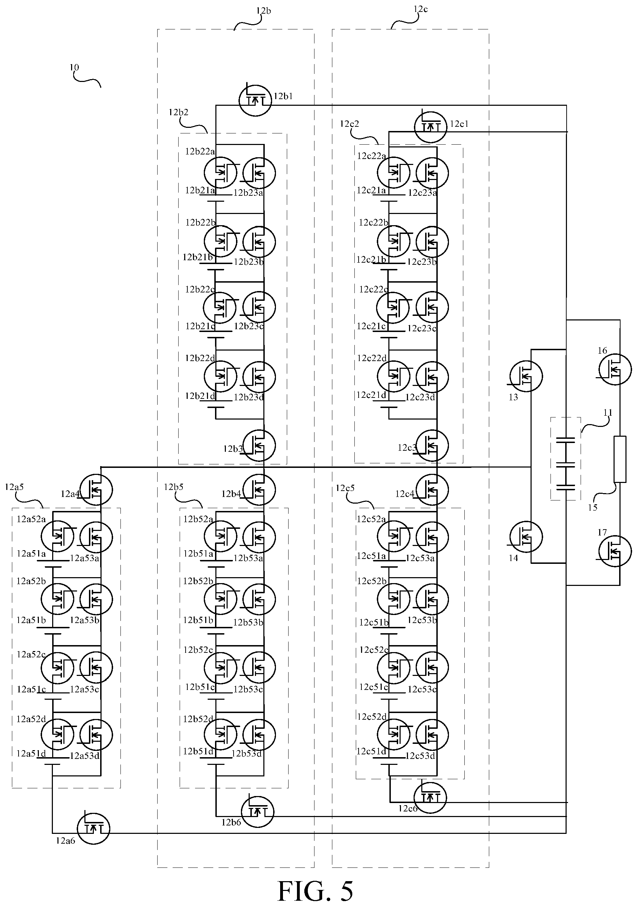

In an embodiment of the present disclosure, in any battery circuit above, if a certain bridge arm in the battery assembly is not energized, the bridge arm can be removed. For example, in the battery circuit shown in FIG. 4, if the first bridge arm 12a2 is not energized, the first bridge arm 12a2, the first switch 12a1, and the second switch 12a3 can be removed, to obtain a battery circuit as shown in FIG. 5. Alternatively, if a certain cell is not energized, the cell is removed.

Definitely, a first bridge arm or a second bridge arm can also be added, and corresponding switches are arranged at two terminals of the bridge arm to connect to the two terminals of the energy storage unit.

Based on the above disclosure, the battery circuit provided in the embodiment of present disclosure has high flexibility.

### <Embodiments of control method for battery circuit>

The present disclosure further provides a control method for a battery circuit. The battery circuit includes: an energy storage unit, and a battery assembly. The battery assembly includes a bridge arm, and the bridge arm includes at least two serially connected cells. The battery circuit can be specifically any battery circuit as described in the above embodiments of battery circuit.

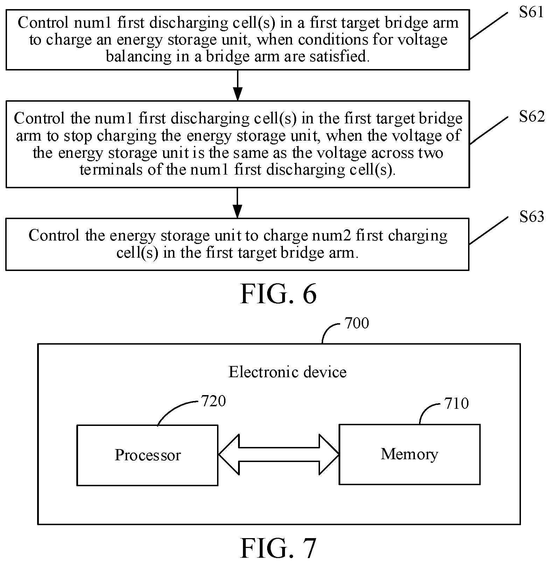

As shown in FIG. 6, the control method for a battery circuit provided in the embodiment of the present disclosure includes the following Steps S61 to S63:

Step S61: Num1 first discharging cell(s) in a first target bridge arm is/are controlled to charge an energy storage unit, when conditions for voltage balancing in a bridge arm are satisfied.

In this embodiment, the conditions for voltage balancing in a bridge arm refer to conditions required for voltage balancing in a bridge arm.

The first target bridge arm may be any bridge arm in at least one battery assembly that requires voltage balancing between cells in the bridge arm. The first target bridge arm may be a first bridge arm, or a second bridge arm. If the first target bridge arm is a first bridge arm, the cells in the bridge arm are specifically a first cell. If the first target bridge arm is a second bridge arm, the cells in the bridge arm are specifically a second cell.

In this embodiment, the cell in the first target bridge arm that charges the energy storage unit is called the first discharging cell.

In an example, a bridge arm with a maximum voltage difference between cells that is greater than a first preset threshold can be regarded as the first target bridge arm. The first preset threshold is the maximum deviation of voltage between cells allowable when the voltage is balanced in a bridge arm. The first preset threshold can be set empirically. Definitely, it can also be determined in other ways, for example, by manual specification.

In an embodiment of the present disclosure, the num1 first discharging cell(s) in the first target bridge arm is/are the first num1 first discharging cell(s) in the first target bridge arm that is/are ranked according to a descending order of the voltages across two terminals of the first discharging cells. Based on this, the num1 first discharging cell(s) is/are high-voltage cell(s) in the first target bridge arm.

The num1 first discharging cell(s) in the first target bridge arm is/are controlled to connect to the energy storage unit, whereby the num1 first discharging cell(s) in the first target bridge arm is/are controlled to charge the energy storage unit.

The controlling of the num1 first discharging cell(s) in the first target bridge arm to charge the energy storage unit may be specifically implemented by controlling switches connected to two terminals of the first target bridge arm to be turned on, and controlling switch(es) serially connected to the num1 first discharging cell(s) in the first target bridge arm to be turned on, switch(es) parallelly connected to cell(s) other than the num1 first discharging cell(s) in the first target bridge arm to be turned on, and other switches to be turned off.

During the process of the num1 first discharging cell(s) in the first target bridge arm charging the energy storage unit, the voltage across two terminals of the num1 first discharging cell(s) in the first target bridge arm decreases.

Step S62: The num1 first discharging cell(s) in the first target bridge arm is/are controlled to stop charging the energy storage unit, when the voltage of the energy storage unit is the same as the voltage across two terminals of the num1 first discharging cell(s).

Step S63: The energy storage unit is controlled to charge num2 first charging cell(s) in the first target bridge arm.

In this embodiment, the num2 first charging cell(s) in the first target bridge arm is/are the first num2 cell(s) in the first target bridge arm that is/are ranked according to an ascending order of the voltages across two terminals of the cells. Based on this, the num2 first charging cell(s) in the first target bridge arm is/are low-voltage cell(s) in the first target bridge arm. Num1 and num2 may be the same; or different.

When the voltage of the energy storage unit is the same as the voltage across two terminals of the num1 first discharging cell(s), the energy storage unit is controlled to disconnect from the num1 first discharging cell(s), whereby the num1 first discharging cell(s) in the first target bridge arm is/are controlled to stop charging the energy storage unit. In this case, the voltage across two terminals of the energy storage unit is larger than the voltage across two terminals of the num2 first charging cell(s) in the first target bridge arm. That is, there is a potential difference between the energy storage unit and the num2 first charging cell(s) in the first target bridge arm. The controlling of the energy storage unit to disconnect from the num1 first discharging cell(s) may be controlling all switches to be turned off.

Further, by controlling the num2 first charging cell(s) in the first target bridge arm to connect to the energy storage unit, the energy storage unit is controlled to charge the num2 first charging cell(s) in the first target bridge arm based on the potential difference.

The controlling of the num2 first charging cell(s) in the first target bridge arm to connect to the energy storage unit may be controlling the switches connected to the two terminals of the first target bridge arm to be turned on, switch(es) serially connected to the num2 first charging cell(s) in the first target bridge arm to be turned on, switch(es) parallelly connected to cell(s) other than the num2 first charging cell(s) in the first target bridge arm to be turned on, and other switches to be turned off.

During the process of the energy storage unit charging the num2 first charging cell(s) in the first target bridge arm, the voltage of the num2 first charging cell(s) in the first target bridge arm increases. Therefore, voltage balancing is implemented in a bridge arm.

In an embodiment of the present disclosure, the control method for a battery circuit provided in the embodiment of the present disclosure further includes Step S64.

Step S64: the step of controlling the num1 first discharging cell(s) in the first target bridge arm to charge the energy storage unit is repeated, when the voltage of the energy storage unit is the same as the voltage across two terminals of the num2 first charging cell(s), until a difference between the voltage across the two terminals of num1 first discharging cell(s) and the voltage across the two terminals of the num2 first charging cell(s) is less than or equal to a first preset threshold.

In this embodiment, when the voltage of the energy storage unit is the same as the voltage across the two terminals of the num2 first charging cell(s), because the potential difference between the energy storage unit and the num2 first charging cell(s) is 0, the energy storage unit cannot charge the num2 first charging cell(s) any longer. In this case, Step S61 is repeated, to enable the num1 first discharging cell(s) in the first target bridge arm to charge the energy storage unit again, and enable the energy storage unit to charge the num2 first charging cell(s) in the first target bridge arm again.

When the difference between the voltage across the two terminals of the num1 first discharging cell(s) and the voltage across the two terminals of the num2 first charging cell(s) is less than or equal to the first preset threshold, the voltage between cells in the first target bridge arm is balanced.

Based on this embodiment, voltage balancing between cells in the first bridge arm is balanced.

In an embodiment of the present disclosure, n cells are provided in the first target bridge arm, and num1 and num2 are the same. If n is an even number, num1≤n/2; and if n is an odd number, num1≤(n+1)/2.

In this embodiment, based on the above definitions, a situation can be avoided where a same cell in the first target bridge arm acts as a first discharging cell and also as a first charging cell.

In an example, on the basis of the exemplary battery circuit shown in FIG. 4, the first target bridge arm is the first bridge arm 12a2, the first discharging cells are respectively the first cell 12a21a and the first cell 12a21d, and the first charging cells are respectively the first cell 12a21b and the first cell 12a21c. In this case, based on Steps S61 to S64, the first switch 12a1, the second switch 12a3, the third switch 12a22a, the fourth switch 12a23b, the fourth switch 12a23c and the third switch 12a22d are controlled to be turned on, and other switches to be turned off. At this time, the first cell 12a21a and the first cell 12a21d charge the energy storage unit 11.

When the voltage across the two terminals of the energy storage unit 11 is the same as the voltage across two terminals of the serially connected first cell 12a21a and first cell 12a21d, all the switches are turned off. In this case, the num1 first discharging cells in the first target bridge arm stop charging the energy storage unit. Then, the first switch 12a1, the second switch 12a3, the fourth switch 12a23a, the third switch 12a22b, the third switch 12a22c, and the fourth switch 12a23d are controlled to be turned on, and other switches to be turned off. In this case, the energy storage unit 11 charges the num2 first charging cells.

When the voltage of the energy storage unit 11 is the same as the voltage across two terminals of the serially connected first cell 12a21b and first cell 12a21c, the third switch 12a22a, the fourth switch 12a23b, the fourth switch 12a23c and the third switch 12a22d are controlled to be turned on again, and the fourth switch 12a23a, the third switch 12a22b, the third switch 12a22c, and the fourth switch 12a23d are controlled to be turned off, until a difference between the voltage across two terminals of the serially connected first cell 12a21a and first cell 12a21d and the voltage across two terminals of the serially connected first cell 12a21b and first cell 12a21c is less than or equal to the first preset threshold.

In an embodiment of the present disclosure, the battery circuit further includes a discharging unit. On this basis, the control method for a battery circuit provided in the embodiment of the present disclosure further includes the following Steps S65 and S66.

Step S65: When the difference between the voltage across the two terminals of the num1 first discharging cell(s) and the voltage across the two terminals of the num2 first charging cell(s) is less than or equal to the first preset threshold, the discharging unit is controlled to connect to the energy storage unit.

In this embodiment, when the difference between the voltage across the two terminals of the num1 first discharging cell(s) and the voltage across the two terminals of the num2 first charging cell(s) is less than or equal to the first preset threshold, the voltage balancing in the first target bridge arm is completed. In this case, the discharging unit is controlled to connect to the energy storage unit. Then, the discharging unit consumes the electric energy on the energy storage unit, to avoid the energization of the energy storage unit. The controlling of the discharging unit to connect to the energy storage unit may be controlling the eleventh switch 16 and the twelfth switch 17 in the battery circuit as shown in FIGs. 1 to 4 to be turned on.

Step S66: When the difference between the voltage across the two terminals of the num1 first discharging cell(s) and the voltage across the two terminals of the num2 first charging cell(s) is greater than the first preset threshold, the discharging unit is controlled to disconnect from the energy storage unit.

Corresponding to Step S66, when the difference between the voltage across the two terminals of the num1 first discharging cell(s) and the voltage across the two terminals of the num2 first charging cell(s) is greater than the first preset threshold, it indicates that the voltage in the bridge arm is not balanced. In this case, the energy storage unit still needs to be in an energized state. At this time, the discharging unit is controlled to disconnect from the energy storage unit.

The controlling of the discharging unit to disconnect from the energy storage unit may be controlling the eleventh switch 16 and the twelfth switch 17 in the battery circuit as shown in FIGs. 1 to 4 to be turned off.

In an embodiment of the present disclosure, the control method for a battery circuit provided in the embodiment of the present disclosure includes the following Steps S67 to S69.

Step S67: Num4 second discharging cell(s) in num3 second target bridge arm(s) is/are controlled to charge the energy storage unit, when conditions for voltage balancing between bridge arms are satisfied.

In this embodiment, the conditions for voltage balancing between bridge arms refer to conditions required for voltage balancing between bridge arms.

The second target bridge arm refers to any high-voltage bridge arm that requires voltage balancing between bridge arms.

On the basis of the example shown in FIG. 4, the voltage balancing between bridge arms may be specifically voltage balancing between the first bridge arms, voltage balancing between the second bridge arms, or voltage balancing between the first bridge arm and the second bridge arm.

In an embodiment of the present disclosure, the num3 second target bridge arm(s) is/are the first num3 bridge arm(s) ranked in a descending order of the voltages across two terminals of the bridge arms. Num3 is an integer greater than 0.

The num4 second discharging cell(s) is/are the first num4 cell(s) in the num3 second target bridge arm(s) that is/are ranked according to a descending order of the voltages across two terminals of the cells. Based on this, the num4 second discharging cell(s) is/are high-voltage cell(s) in the num3 second target bridge arm(s).

By controlling the num4 second discharging cell(s) in the num3 second target bridge arm(s) to connect to the energy storage unit, the num4 second discharging cell(s) in the num3 second target bridge arm(s) can charge the energy storage unit.

During the process of the num4 second discharging cell(s) charging the energy storage unit, the voltage across two terminals of the num4 second discharging cell(s) decreases.

Step S68: When the voltage of the energy storage unit is the same as the voltage across two terminals of the num4 second discharging cell(s), the num4 second discharging cell(s) is/are controlled to stop charging the energy storage unit.

Step S69: The energy storage unit is controlled to charge num6 second charging cell(s) in num5 third target bridge arm(s).

In this embodiment, the third target bridge arm refers to any low-voltage bridge arm that requires voltage balancing between bridge arms. The third target bridge arm may be a first bridge arm or a second bridge arm.

In an embodiment of the present disclosure, the num5 third target bridge arm(s) is/are the first num5 bridge arm(s) ranked in an ascending order of voltages over two terminals of the bridge arms.

The num6 second charging cell(s) is/are the first num6 cell(s) in the num5 third target bridge arm(s) that is/are ranked according to an ascending order of the voltages across two terminals of the cells. Based on this, the num6 second charging cell(s) is/are low-voltage cell(s) in the num5 third target bridge arm(s).

By controlling the num4 second discharging cell(s) to disconnect from the energy storage unit, the num4 second discharging cell(s) stop(s) charging the energy storage unit. By controlling the num6 second charging cell(s) to connect to the energy storage unit, the energy storage unit charges the num6 second charging cell(s).

When the voltage of the energy storage unit is the same as the voltage across the two terminals of the num4 second discharging cell(s), the num4 second discharging cell(s) is/are controlled to stop charging the energy storage unit. In this case, the voltage across two terminals of the energy storage unit is larger than the voltage across two terminals of the num6 second charging cell(s). That is, there is a potential difference between the energy storage unit and the num6 second charging cell(s).

Further, the energy storage unit is controlled to connect to the num6 second charging cell(s), and the energy storage unit is enabled to charge the num6 second charging cell(s) based on the potential difference.

During the process of the energy storage unit charging the num6 second charging cell(s), the voltage of the num6 second charging cell(s) increases. Therefore, the voltage balancing between bridge arms is implemented.

It is to be understood that in the above embodiments, num3 and num5 may be the same, or different. Similarly, num4 and num6 may be the same, or different.

On the basis of the embodiment provided in Steps S67 to S69, the control method for a battery circuit provided in the embodiment of the present disclosure further includes Step S610.

Step S610: When the voltage of the energy storage unit is the same as the voltage across the two terminals of the num6 second charging cell(s), the step of controlling the num4 second discharging cell(s) to charge the energy storage unit is repeated, until a difference between the voltage across the two terminals of num4 second discharging cell(s) and the voltage across the two terminals of the num6 second charging cell(s) is less than or equal to a second preset threshold.

The second preset threshold is the maximum deviation of voltage between bridge arms allowable when the voltage is balanced between bridge arms in the battery circuit.

It is to be understood that the specific implementation of Step S610 is the same as that of Step S64, and will not be described here again.

In an embodiment of the present disclosure, the battery circuit further includes a discharging unit. On this basis, the control method for a battery circuit provided in the embodiment of the present disclosure further includes the following Steps S611 and S612.

Step S611: When the difference between the voltage across the two terminals of the num4 second discharging cell(s) and the voltage across the two terminals of the num6 second charging cell(s) is less than or equal to the second preset threshold, the discharging unit is controlled to connect to the energy storage unit.

Step S612: When the difference between the voltage across the two terminals of the num4 second discharging cell(s) and the voltage across the two terminals of the num6 second charging cell(s) is greater than the second preset threshold, the discharging unit is controlled to disconnect from the energy storage unit.

It is to be understood that the specific implementation of Step S611 is the same as that of Step S65, and the specific implementation of Step S612 is the same as that of Step S66, which will not be described here again.

In an example, on the basis of the example shown in FIG. 4, num3 and num5 are both 1, num4 and num6 are 2, the second target bridge arm is the first bridge arm 12b2, the second discharging cells are the first cell 12b21a and the first cell 12b21d, the third target bridge arm is the second bridge arm 12a5, and the second charging cells are the second cell 12a51a and the second cell 12a51d. In this case, based on Steps S67 to S610, the first switch 12b1, the second switch 12b3, the third switch 12b22a, the fourth switch 12b23b, the fourth switch 12b23c, the third switch 12b22d, and the sixth switch 14 are controlled to be turned on, and other switches to be turned off. At this time, the num4 second discharging cell(s) charge(s) the energy storage unit 11.

When the voltage across two terminals of the energy storage unit 11 is the same as the voltage across two terminals of the num4 serially connected second discharging cell(s), all the switches are controlled to be turned off. In this case, the num4 second discharging cell(s) stop(s) charging the energy storage unit. Then, the fifth switch 13, the seventh switch 12a4, the eighth switch 12a6, the ninth switch 12a52a, the tenth switch 12a53b, the tenth switch 12a53c, the ninth switch 12a52d are controlled to be turned on, and other switches to be turned off. In this case, the energy storage unit 11 charges the num6 second charging cell(s).

When the voltage of the energy storage unit 11 is the same as the voltage across two terminals of the serially connected second cell 12a51a and second cell 12a51d, the first switch 12b1, the second switch 12b3, the third switch 12b22a, the fourth switch 12b23b, the fourth switch 12b23c, the third switch 12b22d, and the sixth switch 14 are controlled to be turned on, and other switches to be turned off, until the difference between the voltage across two terminals of the num4 second discharging cell(s) and the voltage across two terminals of the num6 second charging cell(s) is less than the second preset threshold.

In another example, on the basis of the example shown in FIG. 4, num3 and num5 are both 2, num4 and num6 are both 4, the second target bridge arms are the first bridge arm 12a2 and the second bridge arm 12c5, the third target bridge arms are the first bridge arm 12b2 and the second bridge arm 12a5, the second discharging cells are the first cell 12a21b, the first cell 12a21c, the second cell 12c51b, and the second cell 12c51c, and the second charging cells are the first cell 12b21a, the first cell 12b21d, the second cell 12a51a, and the second cell 12a51d. In this case, based on Steps S67 to S610, the first switch 12a1, the second switch 12a3, the fourth switch 12a23a, the third switch 12a22b, the third switch 12a22c, the fourth switch 12a23d, the seventh switch 12c4, the eighth switch 12c6, the tenth switch 12c53a, the ninth switch 12c52b, the ninth switch 12c52c, and the tenth switch 12c53d are controlled to be turned on, and other switches to be turned off. In this case, the num4 second discharging cell(s) charge(s) the energy storage unit 11.

When the voltage across two terminals of the energy storage unit 11 is the same as the voltage across two terminals of the num4 serially connected second discharging cell(s), all the switches are controlled to be turned off. At this time, the num4 second discharging cell(s) stop(s) charging the energy storage unit. Then, the first switch 12b1, the second switch 12b3, the third switch 12b22a, the fourth switch 12b23b, the fourth switch 12b23c, the third switch 12b22d, the seventh switch 12a4, the eighth switch 12a5, the ninth switch 12a52a, the tenth switch 12a53b, the tenth switch 12a53c, and the ninth switch 12a52d are controlled to be turned on. At this time, the energy storage unit 11 charges the num6 second charging cell(s).

Then, when the voltage of the energy storage unit 11 is the same as the voltage across two terminals of the serially connected first cell 12b21a, first cell 12b21d, second cell 12a51a, and second cell 12a51d, the first switch 12a1, the second switch 12a3, the fourth switch 12a23a, the third switch 12a22b, the third switch 12a22c, the fourth switch 12a23d, the seventh switch 12c4, the eighth switch 12c6, the tenth switch 12c53a, the ninth switch 12c52b, the ninth switch 12c52c, and the tenth switch 12c53d are controlled to be turned on, and other switches to be turned off, until the difference between the voltage across two terminals of the num4 second discharging cell(s) and the voltage across two terminals of the num6 second charging cell(s) is less than the second preset threshold.

In an embodiment of the present disclosure, the control method for a battery circuit provided in the embodiment of the present disclosure includes the following Steps S613 to S615.

Step S613: A voltage balancing type is acquired.

In an embodiment of the present disclosure, Step S613 may be specifically implemented in the following two manners.

In a first manner, the voltage balancing type is manually input. Particularly, the voltage balancing type is determined by a technician according to the test results of each cell in the battery circuit.

In a second manner, a rule is set, and the voltage balancing type is determined according to this rule. The rule can be: When the voltage difference between cells in a bridge arm is greater than the first preset threshold, the voltage balancing type is determined as voltage balancing in a bridge arm, and the bridge arm is used as the first target bridge arm. When the voltage difference between at least one bridge arm and another at least one bridge arm is greater than the second preset threshold, the voltage balancing type is determining as voltage balancing between bridge arms. It is to be understood that this rule can be set by technicians according to their experience.

Step S614: When the voltage balancing type is voltage balancing in a bridge arm, the conditions for voltage balancing in a bridge arm are determined to be satisfied.

Step S615: When the voltage balancing type is voltage balancing between bridge arms, the conditions for voltage balancing between bridge arms are determined to be satisfied.

### <Embodiments of electronic device>

The present disclosure further provides an electronic device. The electronic device includes any battery circuit 10 provided in the embodiments of battery circuit.

Alternatively, as shown in FIG. 7, an electronic device 700 includes a memory 710 and a processor 720. The memory 710 is configured to store a computer program, and the processor 720 is configured to call the computer instruction in the memory 710, to implement the control method for a battery circuit in any one of the embodiments of control method for battery circuit.

### <Embodiments of storage medium>

The present disclosure further provides a computer-readable storage medium, storing a computer program. The computer program, when executed by a processor, implements the control method for a battery circuit according to any one of the embodiments of control method for battery circuit.

The present disclosure may be implemented as a system, a method, or a computer program product. The computer program product includes a computer-readable storage medium, carrying a computer-readable program instruction executable by a processor to implement various aspects of the present disclosure.

The computer-readable storage medium may be a tangible device that can hold and store instructions used by an instruction execution device. The computer-readable storage medium may be, for example, but is not limited to, an electric, magnetic, optical, electromagnetic, or semi-conductor storage device or any suitable combination of the above. More specific examples (a non-exhaustive list) of the computer-readable storage medium include: a portable computer diskette, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disc (DVD), a memory stick, a floppy disk, a mechanical coding device such as a punched card or protrusion in a groove in which instructions are stored, and any appropriate combination of the above. The computer-readable storage medium used here is not to be interpreted as the instantaneous signal itself, such as radio waves or other freely propagating electromagnetic waves, electromagnetic waves propagating through a waveguide or other transmission medium (e.g. optical pulses through optical fiber cables), or an electrical signal transmitted through a wire.

The computer-readable program instructions described herein can be downloaded to each computing/processing device from a computer-readable storage medium, or to an external computer or external storage device via a network, for example, the Internet, a local area network, a wide area network, and/or a wireless network. The network may include a copper transmission cable, fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium within each computing/processing device.

Computer program instructions used to perform operations of the present disclosure may be assembly instructions, instruction set architecture (ISA) instructions, machine instructions, machine-related instructions, microcode, firmware instructions, status setting data, or source code or object code written in any combination of one or more programming languages. The programming languages including object-oriented programming languages such as Smalltalk and C++, and conventional procedural programming languages such as "C" language or similar programming languages. The computer-readable program instructions may be completely executed on a user computer,, partially executed on a user computer, executed as an independent software package, partially executed on a user computer and partially executed on a remote computer, or completely executed on a remote computer or server. For the case involving a remote computer, the remote computer may be connected to a computer of a user through any type of network including a local area network (LAN) or a wide area network (WAN), or may be connected to an external computer (for example, through the Internet by using an Internet service provider). In some embodiments, an electronic circuit, such as a programmable logic circuit, a field programmable gate array (FPGA), or a programmable logic array (PLA), is customized by using status information of the computer-readable program instructions. The electronic circuit may execute the computer-readable program instructions to implement various aspects of the present disclosure.

Various aspects of present disclosure are described with reference to the flowcharts and/or block diagrams of the method, apparatus (system), and computer program product according to the embodiments of the present disclosure. It is to be understood that each block of the flowcharts and/or block diagrams and combinations of blocks in the flowcharts and/or block diagrams can be implemented by computer-readable program instructions.

These computer-readable program instructions can be provided to a processor of a general-purpose computer, a special-purpose computer, or other programmable data processing apparatus, to generate a machine, such that the instructions, when executed by the processor of the computer or other programmable data processing apparatus, create means for implementing the functions/acts specified in one or more blocks of the flowcharts and/or block diagrams. These computer-readable program instructions can also be stored in a computer-readable storage medium, and these instructions enable a computer, a programmable data processing apparatuses and/or other devices to operate in a particular manner. Thus, the computer-readable storage medium storing the instructions can include a product, including instructions for implementing various aspects of the functions/acts specified in one or more blocks of the flowcharts and/or block diagrams.

The computer-readable program instructions may also be loaded onto a computer other programmable data processing apparatuses, or other devices, to cause a series of operational steps to be performed on the computer, other programmable data processing apparatuses, or other devices, to produce a computer implemented process, such that the instructions which execute on the computer, other programmable data processing apparatuses, or other devices implement the functions/acts specified in one or more blocks of the flowcharts and/or block diagrams.

The flowcharts and block diagrams in the accompanying drawings illustrate the present disclosure the architecture, functionality, and operation of possible implementations of systems, methods, and computer program products according to various embodiments of the present disclosure. In this regard, each box in a flowchart or a block diagram may represent a module, a program segment, or a part of instruction. The module, the program segment, or the part of instruction includes one or more executable instructions used for implementing designated logic functions. In some implementations used as substitutes, functions annotated in boxes may occur in a sequence different from that annotated in the accompanying drawing. For example, actually two boxes shown in succession can be performed basically in parallel, and sometimes the two boxes can be performed in a reverse sequence. This depends on the related functions. It should also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction. It is well known to a person skilled in the art that implementation in a hardware manner, implementation in a software manner, and implementation in a combination of software and hardware are equivalent.

The embodiments of the present disclosure are described above, and the foregoing descriptions are exemplary but not exhaustive and are not limited to the disclosed embodiments. Without departing from the scope of the illustrated various embodiments, many modifications and changes are obvious to those of ordinary skill in the art. The choice of terms used herein are intended to best explain the principles and practical use of various embodiments or technical improvements of technologies in the market, or make various embodiment disclosed herein comprehensible to those of ordinary skill in the art. The scope of the present disclosure is defined by the appended claims.

## Claims

1. A battery circuit, comprising: an energy storage unit, at least one battery assembly, and a processing unit, wherein
for each battery assembly, the battery assembly is connected parallelly to two terminals of the energy storage unit, and the battery assembly comprises a first bridge arm, wherein the first bridge arm comprises at least two serially connected first cells;
the processing unit is connected to a control terminal of the energy storage unit and a control terminal of each first bridge arm, and is configured to control at least one first cell in at least one first bridge arm to connect to the energy storage unit,
wherein different first cells have the same rated voltage.

2. The battery circuit according to claim 1, wherein for each battery assembly, the battery assembly further comprises:
a first switch and a second switch, wherein a first terminal of the energy storage unit, the first switch, the first bridge arm, the second switch, and a second terminal of the energy storage unit are connected in sequence; and
the processing unit is connected to a control terminal of the first switch and the second switch.

3. The battery circuit according to claim 1 or 2, wherein the first bridge arm further comprises a third switch and a fourth switch, each first cell is connected serially to the third switch, and each first cell is connected serially to the third switch and then parallelly to the fourth switch; and
the processing unit is connected to a control terminal of the third switch and the fourth switch.

4. The battery circuit according to any one of claims 1 to 3, wherein for at least one battery assembly, the battery assembly further comprises a second bridge arm, the second bridge arm comprises a second cell, and the processing unit is further configured to control the second cell in the second bridge arm to connect to the energy storage unit.

5. The battery circuit according to claim 4, wherein the first bridge arm is connected parallelly to the two terminals of the energy storage unit, and the second bridge arm is connected parallelly to the two terminals of the energy storage unit;
optionally wherein for at least one battery assembly, the battery assembly further comprises:
a seventh switch and an eighth switch, the first terminal of the energy storage unit, the seventh switch, the second bridge arm, the eighth switch, and the second terminal of the energy storage unit are connected in sequence; the second bridge arm comprises at least two serially connected second cells; and the processing unit is connected to a control terminal of the seventh switch and the eighth switch, and further configured to control at least one second cell in at least one second bridge arm to connect to the energy storage unit.

6. The battery circuit according to claim 4 or 5, further comprising a fifth switch and a sixth switch, wherein
the first terminal of the energy storage unit, the fifth switch, the second bridge arm, and the second terminal of the energy storage unit are connected in sequence;
the first terminal of the energy storage unit, the first bridge arm, the sixth switch, and the second terminal of the energy storage unit are connected in sequence; and
the processing unit is connected to a control terminal of the fifth switch and the sixth switch;
optionally wherein the fifth switch and the sixth switch are connected serially; the first bridge arm and the second bridge arm are connected serially; and the point of connection of the fifth switch and the sixth switch is connected to the point of connection of the first bridge arm and the second bridge arm.

7. The battery circuit according to any one of claims 4 to 6, wherein the second bridge arm further comprises:
a ninth switch and a tenth switch, wherein each second cell is connected serially to the ninth switch, and each second cell is connected serially to the ninth switch and then parallelly to the tenth switch; and
the processing unit is connected to a control terminal of the ninth switch and the tenth switch.

8. The battery circuit according to any one of claims 1 to 7, further comprising: a discharging unit, wherein
the discharging unit is connected parallelly to the energy storage unit;
optionally further comprising: an eleventh switch and a twelfth switch, wherein the first terminal of the energy storage unit, the eleventh switch, the discharging unit, the twelfth switch, and the second terminal of the energy storage unit are connected in sequence; and the processing unit is connected to a control terminal of the eleventh switch and the twelfth switch, and configured to control whether to connect the discharging unit to the energy storage unit or not.

9. A control method for a battery circuit, comprising:
controlling num1 first discharging cell(s) in a first target bridge arm to charge an energy storage unit, when conditions for voltage balancing in a bridge arm are satisfied;
controlling the num1 first discharging cell(s) in the first target bridge arm to stop charging the energy storage unit, when the voltage of the energy storage unit is the same as the voltage across two terminals of the num1 first discharging cell(s); and
controlling the energy storage unit to charge num2 first charging cell(s) in the first target bridge arm;
wherein the battery circuit comprises: the energy storage unit and a battery assembly; wherein the battery assembly comprises a bridge arm; and wherein the bridge arm comprises at least two serially connected cells.

10. The method according to claim 9, further comprising:
repeating the step of controlling the num1 first discharging cell(s) in the first target bridge arm to charge the energy storage unit, when the voltage of the energy storage unit is the same as the voltage across two terminals of the num2 first charging cell(s), until a difference between the voltage across the two terminals of the num1 first discharging cell(s) and the voltage across the two terminals of the num2 first charging cell(s) is less than or equal to a first preset threshold.

11. The method according to claim 9 or 10, wherein n cells are provided in the first target bridge arm, and num1 and num2 are the same; if n is an even number, num1≤n/2; and if n is an odd number, num1≤(n+1)/2.

12. The method according to any one of claims 9 to 11, further comprising:
controlling a discharging unit to connect to the energy storage unit, when the difference between the voltage across the two terminals of the num1 first discharging cell(s) and the voltage across the two terminals of the num2 first charging cell(s) is less than or equal to the first preset threshold; and
controlling the discharging unit to disconnect from the energy storage unit, when the difference between the voltage across the two terminals of the num1 first discharging cell(s) and the voltage across the two terminals of the num2 first charging cell(s) is larger than the first preset threshold,
wherein the battery circuit further comprises the discharging unit.

13. The method according to any one of claims 9 to 12, further comprising:
controlling num4 second discharging cell(s) in num3 second target bridge arm(s) to charge the energy storage unit, when conditions for voltage balancing between bridge arms are satisfied;
controlling the num4 second discharging cell(s) to stop charging the energy storage unit, when the voltage of the energy storage unit is the same as the voltage across two terminals of the num4 second discharging cell(s); and
controlling the energy storage unit to charge num6 second charging cell(s) in num5 third target bridge arm(s);
optionally further comprising:
acquiring a voltage balancing type;
determining that the conditions for voltage balancing in a bridge arm are satisfied if the voltage balancing type is voltage balancing in a bridge arm; and
determining that the conditions for voltage balancing between bridge arms are satisfied if the voltage balancing type is voltage balancing between bridge arms.

14. An electronic device, comprising a battery circuit according to any one of claims 1 to 8;
or comprising a memory and a processor, the memory being configured to store a computer program, and the processor being configured to call the computer instruction in the memory, to implement the method according to any one of claims 9 to 13.

15. A computer-readable storage medium, storing a computer program, the computer program, when executed by a processor, implementing the method according to any one of claims 9 to 13.
